(19) Europäisches Patentamt
European Patent Office
Office européen des brevets

(11) **EP 3 862 907 A1**

(12) **EUROPEAN PATENT APPLICATION**

(43) Date of publication:
**11.08.2021 Bulletin 2021/32**

(51) Int Cl.:
***G06F 40/295*** (2020.01)

(21) Application number: **21151484.9**

(22) Date of filing: **14.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2020 CN 202010042343**

(71) Applicant: **BEIJING BAIDU NETCOM SCIENCE AND TECHNOLOGY CO. LTD.**
**100085 Beijing (CN)**

(72) Inventors:
• **WANG, Shu**
  **Beijing, 100085 (CN)**
• **REN, Kexin**
  **Beijing, 100085 (CN)**
• **ZHANG, Xiaohan**
  **Beijing, 100085 (CN)**
• **FENG, Zhifan**
  **Beijing, 100085 (CN)**
• **ZHANG, Yang**
  **Beijing, 100085 (CN)**
• **ZHU, Yong**
  **Beijing, 100085 (CN)**

(74) Representative: **Maiwald Patent- und Rechtsanwaltsgesellschaft mbH**
**Elisenhof**
**Elisenstraße 3**
**80335 München (DE)**

(54) **METHOD AND APPARATUS FOR LABELING CORE ENTITY, AND ELECTRONIC DEVICE**

(57)    Embodiments of the disclosure provide a method and an apparatus for labelling a core entity, and a related electronic device. A character vector sequence, a first word vector sequence and an entity vector sequence corresponding to a target text are obtained (101) by performing character vector mapping, word vector mapping and entity vector mapping are performed on the target text, to obtain (102) a target vector sequence corresponding to the target text. A first probability that each character of the target text is a starting character of a core entity and a second probability that each character of the target text is an ending character of a core entity are determined (103) by encoding and decoding the target vector sequence. One or more core entities of the target text are determined (104) based on the first probability and the second probability.

performing character vector mapping, word vector mapping and entity vector mapping on a target text to obtain a character vector sequence, a first word vector sequence and an entity vector sequence corresponding to the target text, the character vector sequence includes character vectors corresponding to characters contained in target text, the first word vector sequence includes word vectors corresponding to word segmentations contained in target text, and the entity vector sequence includes entity vectors corresponding to entities contained in target text
101

generating a target vector sequence corresponding to the target text based on the character vector sequence, the first word vector sequence and the entity vector sequence corresponding to the target text 102

determining a first probability that each character of the target text is a starting character of a core entity and a second probability that each character of the target text is an ending character of a core entity by encoding and decoding the target vector sequence using a preset network model 103

determining one or more core entities of the target text based on the first probability and the second probability 104

FIG. 1

EP 3 862 907 A1

## Description

## TECHNICAL FIELD

The present disclosure relates to a field of computer technologies, particularly to the field of intelligent search technology, a method and an apparatus for labelling a core entity labeling, and an electronic device.

## BACKGROUND

With the development of information technology, text data has exploded. Core content may be extracted from massive text content through manual processing. In addition, computer technology may also be used to realize intelligent understanding and labelling of text content, to allow automatic and intelligent text content production, processing, distribution, and recommendation. Entity understanding is an important part of text understanding, and fine-grained text understanding results (such as, a corresponding entity side and topic) can be generated by labelling the core entities, to help users well understand the text resources of webpages or recommend text resources that are in line with the user's needs based on user's intention.

In related arts, keywords that can describe the core content of a short text may be generally extracted to characterize the core content of the short text. However, because keywords are not necessarily entity words, the determined core content of the short text lacks semantic information, which makes it difficult to meet different application requirements.

## SUMMARY

Embodiments of the disclosure provide a method and an apparatus for labelling a core entity and a related electronic device, for solving a problem existing in prior arts that it is difficult to meet different application requirements by extracting keywords that can describe the core content of a short text to characterize the core content of the short text, since the keywords are not necessarily entity words such that the determined core content of the short text lacks semantic information.

Embodiments of the disclosure provide a method for labelling a core entity. The method includes: performing character vector mapping, word vector mapping and entity vector mapping on a target text to obtain a character vector sequence, a first word vector sequence and an entity vector sequence corresponding to the target text, in which the character vector sequence includes character vectors corresponding to characters contained in the target text, the first word vector sequence includes word vectors corresponding to word segmentations contained in the target text, and the entity vector sequence includes entity vectors corresponding to entities contained in the target text; generating a target vector sequence corresponding to the target text based on the character vector sequence, the first word vector sequence and the entity vector sequence corresponding to the target text; determining a first probability that each character of the target text is a starting character of a core entity and a second probability that each character of the target text is an ending character of a core entity by encoding and decoding the target vector sequence using a preset network model; and determining one or more core entities of the target text based on the first probability and the second probability.

Embodiments of the disclosure provide an apparatus for labelling a core entity. The apparatus includes a first obtaining module, configured to perform character vector mapping, word vector mapping and entity vector mapping on a target text to obtain a character vector sequence, a first word vector sequence and an entity vector sequence corresponding to the target text, in which the character vector sequence includes character vectors corresponding to characters contained in the target text, the first word vector sequence includes word vectors corresponding to word segmentations contained in the target text, and the entity vector sequence includes entity vectors corresponding to entities contained in the target text; a generating module, configured to generate a target vector sequence corresponding to the target text based on the character vector sequence, the first word vector sequence and the entity vector sequence corresponding to the target text; a first determining module, configured to determine a first probability that each character of the target text is a starting character of a core entity and a second probability that each character of the target text is an ending character of a core entity by encoding and decoding the target vector sequence using a preset network model; and a second determining module, configured to determine one or more core entities of the target text based on the first probability and the second probability.

Embodiments of the disclosure provide an electronic device. The electronic device includes at least one processor and a memory communicatively connected with the at least one processor. The memory is configured to store instructions executable by the at least one processor. When the instructions are executed by the at least one processor, the at least one processor is caused to execute a method for labelling a core entity as described above.

Embodiments of the disclosure provide a non-transitory computer readable storage medium, having computer instructions stored thereon. The computer instructions are configured to cause a computer to execute a method for labelling a core entity as described above.

Embodiments of the disclosure provide a computer program, containing program instructions. When the program instructions are executed on a processor, the processor is caused to execute a method for labelling a core entity as described above.

Following advantages or beneficial effects may be provided by embodiments of the disclosure. By fusing the character vectors, word vectors, and entity vectors of the target text, the first probability that each character of the target text is the starting character of the core entity and the second probability that each character of the target text is the ending character of the core entity may be determined using the preset network model, and the one or more core entities of the target text may be determined based on the first probability and the second probability, thereby improving the accuracy of extracting the core entities of the text, enriching the semantic information of the core content of the text, and providing good universality. By applying the character vector mapping, the word vector mapping and the entity vector mapping on the target text respectively, the character vector sequence, the first word vector sequence and the entity vector sequence corresponding to the target text are obtained. The target vector sequence corresponding to the target text is generated based on the character vector sequence, the first word vector sequence and the entity vector sequence corresponding to the target text. The first probability that each character of the target text is the starting character of the core entity and the second probability that each character of the target text is the ending character of the core entity are determined by encoding and decoding the target vector sequence using the preset network model. The one or more core entities of the target text are determined based on the first probability and the second probability. Therefore, the method may solve the problem that it is difficult to meet different application requirements by extracting keywords that can describe the core content of a short text to characterize the core content of the short text, since the keywords are not necessarily entity words such that the determined core content of the short text lacks semantic information. In addition, the method may accurately extract the core entities from the text, enrich the semantic information of the core text content and provide a good universality.

Other effects of the above-mentioned implementations will be described below in conjunction with embodiments.

**BRIEF DESCRIPTION OF THE DRAWINGS**

The drawings are used to well understand the solution and do not constitute a limitation to the disclosure.

FIG. 1 is a schematic flowchart illustrating a method for labelling a core entity according to embodiments of the disclosure.
FIG. 2 is a schematic flowchart illustrating a method for labeling a core entity according to embodiments of the disclosure.
FIG. 3 is a schematic flowchart illustrating a method for labelling a core entity according to embodiments of the disclosure.
FIG. 4 is a schematic block diagram illustrating an apparatus for labelling a core entity according to embodiments of the disclosure.
FIG. 5 is a schematic block diagram illustrating an electronic device according to embodiments of the disclosure.

**DETAILED DESCRIPTION**

Exemplary embodiments of the disclosure will be described below in conjunction with the accompanying drawings, which include various details of embodiments of the disclosure to facilitate understanding and thus should be regarded as merely exemplary. Therefore, those of ordinary skill in the art should realize that various changes and modifications can be made to embodiments described herein without departing from the scope and spirit of the disclosure. Similarly, for clarity and conciseness, descriptions of well-known functions and structures are omitted in the following description.

Embodiments of the disclosure provide a method for labeling a core entity, for solving a problem existing in related art that since a keyword is not necessarily an entity word, semantic information of core content of a short text misses by characterizing the core content of the short text by the keyword extracted from the short text and thus it is difficult to meet various application requirements.

A method and an apparatus for labeling a core entity, an electronic equipment, and a storage medium according to embodiments of the disclosure will be described in detail below with reference to the accompanying drawings.

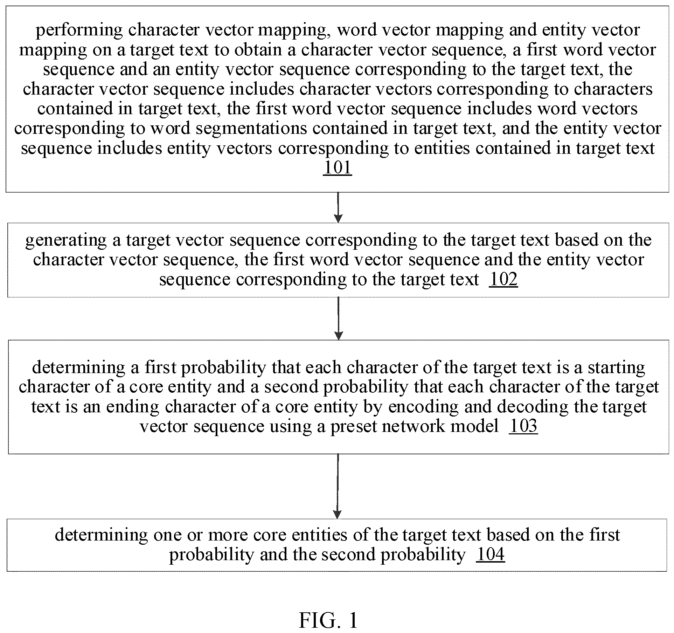

The method for labeling a core entity according to embodiments of the disclosure will be described in detail with reference to FIG. 1.

FIG. 1 is a schematic flowchart illustrating a method for labeling a core entity according to embodiments of the disclosure.

As illustrated in FIG. 1, the method for labeling a core entity may include the following.

At block 101, character vector mapping, word vector mapping, and entity vector mapping are performed respectively on a target text, to obtain a character vector sequence, a first word vector sequence, and an entity vector sequence corresponding to the target text. The character vector sequence includes character vectors corresponding to characters in the target text. The first word vector sequence includes word vectors corresponding to each word segmentation of the target text. The entity vector sequence includes entity vectors corresponding to entities in the target text.

In some embodiments, the character refers to a Chinese character, and the character vector refers to a vector of the Chinese character. The word refers to a phrase or a term including Chinese characters, and the word vector refers to a vector of the word.

It should be noted, when the intelligent understanding of text content is realized through computer technology, and the automatic and intelligent text content production, processing, and distribution recommendation are realized, the core content of the text can be described by extracting keywords of the text. However, since the keywords are not necessarily entity words, the determined core content of the text may lack semantic information, and thus it is difficult to meet different application requirements. By expressing the core content of the text using entities in a constructed knowledge base (such as knowledge graph), the semantic information of the core content of the text may be enriched, since the knowledge base contains not only a large amount of entities, but also conceptual information of each entity and relationships between the entities.

The target text refers to the text information whose core entities need to be labeled currently. The target text can be any text data, such as news titles, video titles, webpage articles, and so on.

The character vector mapping refers to a process of determining a respective character vector corresponding to each character in the target text. The word vector mapping refers to a process of determining a respective word vector corresponding to each word in the target text. The entity vector mapping refers to a process of determining entities in the target text and entity vectors corresponding to the entities using a knowledge base.

In some embodiments of the disclosure, the target text may be segmented character by character. That is, the target text may be segmented into characters. Each character is input into a pre-trained character vector mapping model to determine a character vector corresponding to the character in the target text. The character vector sequence corresponding to the target text may be generated based on the character vector corresponding to each character. That is, each element (vector) of the character vector sequence corresponding to the target text is a character vector corresponding to a character.

In some implementations, the character vector mapping model used may be a bidirectional encoder representation from transformer (BERT) model. The BERT model can well express the semantic information of a text. It should be noted, in actual use, the pre-trained character vector mapping model can be any natural language processing model that can generate character vectors of the characters, which is not limited in embodiments of the disclosure.

In some embodiments of the disclosure, the target text may be segmented into words having semantic information. The multiple word segmentations obtained by segmenting the target text may be input into the pre-trained word vector mapping model to determine word vectors corresponding to the word segmentations in the target text. The word vector sequence corresponding to the target text may be generated based on the word vectors corresponding to the word segmentations of the target text. That is, each element (vector) in the word vector sequence corresponding to the target text is a word vector corresponding to a word segmentation.

In some implementations, the word vector mapping model used may be Word2Vec model. It should be noted, in actual use, the pre-trained word vector mapping model can be any natural language processing model that can generate vectors for word segmentations, which is not limited in embodiments of the disclosure.

In embodiments of the disclosure, a pre-built knowledge base can be used to determine, from the knowledge base, entities corresponding to respective word segmentations in the target text. Therefore, entities corresponding to the target text may be determined and entity vectors corresponding to the entities may be determined for the target text based on the entity vectors corresponding to the entities in the knowledge base. Further, the entity vector sequence corresponding to the target text may be generated based on the entity vectors corresponding to the entities.

In detail, while determining, from the knowledge base, the entity corresponding to each word segmentation in the target text, the entity corresponding to each word segmentation may be determined based on a similarity (such as cosine similarity) between the word vector corresponding to each word segmentation and the entity vector corresponding to each entity in the knowledge base. For example, a similarity threshold may be preset, and in a case where the similarity between an entity vector of an entity and a word vector corresponding to a word segmentation is greater than the similarity threshold, it may be determined that that entity corresponds to that word segmentation.

In some implementations, the pre-built knowledge base can be constructed using a general knowledge graph. In detail, the pre-built knowledge base may include a general knowledge graph and the entity vectors corresponding to the entities in the knowledge graph. Since the entity in the knowledge graph is generally words or a short sentence, the entity vector corresponding to each entity can be obtained by using a pre-trained word vector mapping model, such as a Word2Vec model.

For example, the target text may be "血糖不正常的标准是多少 (a Chinese sentence meaning 'what's the standard to determine the abnormal blood glucose')". The target text can be segmented into characters to obtain the characters contained in the target text, such as "3. 血 (a Chinese character corresponding to the word 'blood')," "糖 (a Chinese character corresponding to the word 'glucose')," "不 (a Chinese character corresponding to the word 'abnormal')," "正 (a Chinese character corresponding to the word 'abnormal')," "常 (a Chinese character corresponding to the word 'normal')," "的 (a Chinese character corresponding to the word 'to')," "标 (a Chinese character, corresponding to the word 'standard')," " 准 (a Chinese

character corresponding to the word 'standard')," " 是 (a Chinese character corresponding to the word 'is')," " 多 (a Chinese character corresponding to the word 'what')," and " 少 (a Chinese character corresponding to the word 'what')". The characters are input into the BERT model to determine character vectors corresponding to the characters. The character vector sequence corresponding to the target text may be generated with the character vectors. The target text may be segmented into words having semantic information, to obtain the word segmentations of the target text, such as " 血糖 (a Chinese phrase or term formed by Chinese characters, corresponding to 'blood glucose')," " 不 (a Chinese phrase or term formed by Chinese characters, corresponding to 'ab-')," " 正常 (a Chinese phrase or term formed by Chinese characters, corresponding to 'normal')," " 的 (a Chinese phrase or term formed by Chinese characters, corresponding to 'to')," " 标准 (a Chinese phrase or term formed by Chinese characters, corresponding to 'standard')," " 是 (a Chinese phrase or term formed by Chinese characters, corresponding to 'is')," " 多少 (a Chinese phrase or term formed by Chinese characters, corresponding to 'what')". The word segmentations may be input into the Word2Vec model to determine the word vectors corresponding to the word segmentations. The word vector sequence corresponding to the target text may be generated using the word vectors. The similarity between the word vector corresponding to each word segmentation in the target text and the entity vector of each entity in the pre-built knowledge base may be determined to determine the entity vectors respectively corresponding to the entities of the target text, i.e., " 血糖 ," " 不 ," " 正常 ," " 的 ," " 标准 ," " 是 " " 多少 ". The entity vector sequence corresponding to the target text may be generated using the entity vectors.

At block 102, a target vector sequence corresponding to the target text is generated based on the character vector sequence, a first word vector sequence and the entity vector sequence corresponding to the target text.

In embodiments of the disclosure, in order to avoid occurrence of errors on boundary segmentation to the greatest extent when segmenting the target text, it is possible to generate the character vector sequence corresponding to the target text by performing a selection in a basic unit of characters. However, only characters are difficultly used to store effective semantic information. Therefore, using the acquired character vector sequence, first word vector sequence, and entity vector sequence together allows to store more effectively the semantic information of the target text.

In some implementations, the character vector sequence, the first word vector sequence, and the entity vector sequence corresponding to the target text can be spliced to generate the target vector sequence corresponding to the target text. In detail, the character vector sequence, the first word vector sequence, and the entity vector sequence corresponding to the target text can each be regarded as a matrix. In the matrix corresponding to the character vector sequence, the number of rows equals to the number of characters contained in the target text, and the number of columns equals to the number of elements contained in a character vector. In the matrix corresponding to the first word vector sequences, the number of rows equals to the number of word segmentations contained in the target text, and the number of columns equals to the number of elements contained in a word vector. In the matrix corresponding to the entity vector sequence, the number of rows equals to the number of entities corresponding to the target text, and the number of columns equals to the number of elements contained in an entity vector. Since the number of dimensions of the character vector sequence, the number of dimensions of the first word vector sequence, and the number of dimensions of the entity vector sequence may be different, matrix transformation may be performed on the first word vector sequence and the entity vector sequence to equal the number of dimensions of a transformed first word vector sequence and the number of dimensions of the transformed entity vector sequence to the number of dimensions of the character vector sequence. Elements on each row of the character vector sequence is sliced with elements in a corresponding row of the transformed first word vector sequence as well as elements in a corresponding row of the transformed entity vector sequence to generate the target vector sequence corresponding to the target text. That is, a target vector of the target vector sequence may be obtained by slicing elements on corresponding rows of the character vector sequence, the transformed first word vector sequence and the transformed entity vector sequence.

In some implementations, a mean value of the character vector sequence, the first word vector sequence, and the entity vector sequence corresponding to the target text can also be determined as the target vector sequence corresponding to the target text. That is, after the matrix transformation is performed on the first word vector sequence and the entity vector sequence, the mean value of elements on each row of the character vector sequence, and elements on a corresponding row of the transformed first vector sequence, as well as elements on a corresponding row of the transformed entity vector sequence may be obtained as a target vector of the target vector sequence.

Further, since each word segmentation in the target text may include multiple characters, the number of dimensions of the first word vector sequence is generally smaller than the number of dimensions of the character vector sequence. In this case, word vectors of the first word vector sequence can be replicated to align the first word vector with the character vector. For example, in some implementations of embodiments of the disclosure, the block 102 may include the following.

When a first word segmentation corresponding to the first word vector of the first word vector sequence includes N characters, the first word vector is replicated for N times to generate a second word vector sequence. The matrix transformation is performed on the second word vector sequence to generate a third word vector sequence. The number of dimensions of the third word vector sequence is the same as the number of dimensions of the character vector sequence corresponding to the target text. The third word vector sequence and the character vector sequence corresponding to the target text is synthesized to generate a preprocessed vector sequence. A matrix transformation is performed on the entity vector sequence corresponding to the target text to align the transformed entity vector sequence and the preprocessed vector sequence, to generate a transformed vector sequence having the same number of dimensions with the preprocessed vector sequence. The transformed vector sequence and the preprocessed vector sequence are synthesized to generate the target vector sequence.

In some implementations, when the character vector sequence, the first word vector sequence, and the entity vector sequence corresponding to the target text are merged to generate the target vector sequence corresponding to the target text, the first word vector sequence and the entity vector sequence may be aligned with the character vector sequence and then subjected to the matrix transformation. Therefore, when the character vector sequence, the first word vector sequence and the entity vector sequence are mixed, a strong correlation between each character vector, the corresponding first word vector and the corresponding entity vector allows to improve the accuracy of labelling the core entities.

In detail, for each first word vector in the first word vector sequence, the first word vector may be replicated based on the number of characters contained in the first word segmentation corresponding to the first word vector to generate the second word vector sequence aligned with the character vector sequence. That is, the first word vector may be replicated for N times where the first word segmentation corresponding to the first word vector includes N characters. The number of word vectors included in the second word vector sequence is equal to the number of character vectors included in the character vector sequence.

In addition, since the natural language processing model used to obtain the character vector sequence of the target text may be different from the natural language processing model used to obtain the first word vector sequence, the number of dimensions of a character vector contained in the character vector sequence may be different from the number of dimensions of a word vector contained in the second word vector sequence, i.e., the number of columns of the word vector sequence is different from the number of columns of the second word vector sequence. The matrix transformation may be further performed on the second word vector sequence to generate the third word vector sequence having the same number of dimensions with the word vector sequence. The character vector sequence and the third word vector sequence can be synthesized to generate the target vector sequence.

It should be noted, while synthesizing the character vector sequence and the third word vector sequence, the character vector sequence and the third word vector sequence can be spliced to generate the target vector sequence. In some embodiments, while synthesizing the character vector sequence and the third word vector sequence, a mean value between each character vector contained in the character vector sequence and a word vector on a corresponding row of the third word vector sequence may be determined as a preprocessed vector contained in the preprocessed vector sequence, so as to generate the preprocessed vector sequence.

For example, the target text may be "去吃饭吗 (a Chinese sentence meaning "are you going to eat something?"). Characters contained in the target text may include "去 (a Chinese character corresponding to word 'going')," "吃 (a Chinese character corresponding to words 'to eat')," "饭 (a Chinese character corresponding to word 'something')," and "吗 (a Chinese character corresponding to words 'are you')", and word segments contained in the target text may include "去 (a Chinese phrase or term formed by Chinese characters corresponding to word 'going')," "吃饭 (a Chinese phrase or term formed by Chinese characters corresponding to words 'to eat something')," and "吗 (a Chinese phrase or term formed by Chinese characters corresponding to words 'are you')". Thus, the character

$$A = \begin{bmatrix} a_1 \\ a_2 \\ a_3 \\ a_4 \end{bmatrix},$$

vector sequence may be obtained as where $a_1$, $a_2$, $a_3$, and $a_4$ are character vectors respectively corresponding to the characters "去," "吃," "饭," and "吗", and the first

$$B = \begin{bmatrix} b_1 \\ b_2 \\ b_3 \end{bmatrix},$$

word vector sequence may be obtained as

where $b_1$, $b_2$, and $b_3$ are word vectors respectively corresponding to the word segmentations "去," "吃饭," and "吗". The second word vector sequence may be obtained as

$$B=\begin{bmatrix} b_1 \\ b_2 \\ b_2 \\ b_3 \end{bmatrix}.$$

In a case where the preprocessed vector sequence is obtained by slicing the character vector sequence and the second word vector sequence, it may be determined that the preprocessed vector sequence may be represented as

$$C=\begin{bmatrix} a_1 & b_1 \\ a_2 & b_2 \\ a_3 & b_2 \\ a_4 & b_3 \end{bmatrix}.$$

In a case wherein the preprocessed vector sequence is the mean value of the character vector sequence and the second word vector sequence, it may be determined that the preprocessed vector sequence may be represented as

$$C=\begin{bmatrix} (a_1 + b_1)/2 \\ (a_2 + b_2)/2 \\ (a_3 + b_2)/2 \\ (a_4 + b_3)/2 \end{bmatrix}.$$

Correspondingly, the same manner as processing the first word vector sequence can be used to perform the matrix transformation on the entity vector sequence and align the transformed entity vector to the preprocessed vector sequence to generate the transformed vector sequence having the same number of dimensions as the preprocessed vector sequence (i.e., having the same number of dimensions as the character vector sequence). The transformed vector sequence and the preprocessed vector sequence are synthesized to generate the target vector sequence.

It should be noted, in a case where the preprocessed vector sequence is generated by splicing the character vector sequence and the second word vector sequence, the transformed vector sequence may be spliced with the preprocessed vector sequence to generate the target vector sequence. In a case where each preprocessed vector contained in the preprocessed vector sequence is a mean value of a respective character vector contained in the character vector sequence and a respective word vector contained in the second word vector sequence, a mean value of a transformed vector contained in the transformed vector sequence and a corresponding preprocessed vector contained in the preprocessed vector sequence may be determined as a target vector contained in the target vector sequence, so as to generate the target vector sequence.

At block 103, the target vector sequence is encoded and decoded with a preset network model, to determine a first probability that a character contained in the target text is a starting character of a core entity and a second probability that a character contained in the target text is an ending character of a core entity.

The preset network model may be a pre-trained neural network model, for example, an expansion gate convolutional neural network model.

In embodiments of the disclosure, a double pointer labeling method may be used to label a starting position and an ending position of a core entity in the target text. That is, the target vector sequence corresponding to the target text can be input into the preset network model, such that the preset network model may output the first probability that each character contained in the target text is the starting character of the core entity and the second probability that each character contained in the target text is the ending character of the core entity. Therefore, double-pointer labelling of the core entities contained in target text may be realized to improve the accuracy of labelling the core entities.

At block 104, one or more core entities of the target text may be determined based on the first probability that each character is the starting character of a core entity and the second probability that each character is the ending character of a core entity.

In some embodiments of the disclosure, the one or more core entities of the target text may be determined based on the first probability that each character of the target text is the starting character of a core entity and the second probability that each character of the target text is the ending character of a core entity.

In some examples, a probability threshold can be set in advance. A first character may be determined from the target text, where the probability that the first character is the starting character of a core entity is greater than or equal to the probability threshold. A second character may be determined from the target text, where the probability that the second character is the ending character of a core entity is greater than or equal to the probability threshold. The first character may be determined as the starting character of the core entity of the target text and the second character after the first character may be determined as the ending character of the core entity of the target text to determine the core entity of the target text.

For example, the preset probability threshold is 0.8, and the target text is "夏至未至：陆之昂和七七开始吃了起来，七七太能吃！(a Chinese sentence meaning 'Rush to the Dead Summer: Lu Zhiang and Qi Qi start eating and Qi Qi eats too much!')". The probability that the character "陆 (a Chinese character, corresponding to word 'Lu')" in the target text is the starting character of the core entity is greater than 0.8. The probability that the char-

acter "昂 (a Chinese character, corresponding to word 'Zhiang')" is the ending character of the core entity is greater than 0.8. The probability that the character "七 (a Chinese character corresponding to word 'Qi') is the starting character of the core entity is greater than 0.8 and the probability that the character "七 (a Chinese character corresponding to word 'Qi') is the ending character of the core entity is greater than 0.8. Thus, it may be determined that the core entities of the target text include "陆之昂 (a Chinese phrase or term formed by Chinese characters, corresponding to 'Lu Zhiang'," "七七 (a Chinese phrase or term formed by Chinese characters, corresponding to 'Qi Qi')," and "陆之昂和七七 (a Chinese phrase or term formed by Chinese characters, corresponding to 'Lu Zhiang and Qi Qi')".

Based on embodiments of the disclosure, the character vector mapping, the word vector mapping, and the entity vector mapping are performed respectively on the target text, to obtain the character vector sequence, the first word vector sequence, and the entity vector sequence corresponding to the target text. The target vector sequence corresponding to the target text may be generated based on the character vector sequence, the first word vector sequence and the entity vector sequence corresponding to the target text. The target vector sequence may be encoded and decoded using the preset network model to determine the first probability that each character contained in the target text is the starting character of the core entity and the second probability that each character contained in the target text is the ending character of the core entity, to determine the core entity of the target text. Therefore, by fusing the character vectors, the word vectors, and the entity vectors of the target text, the first probability that each character of the target text is the starting character of the core entity and the second probability that each character of the target text is the ending character of the core entity may be determined using the preset network model, and the one or more core entities of the target text may be determined based on the first probability and the second probability, thereby improving the accuracy of extracting the core entities of the text, enriching the semantic information of the core content of the text, and providing good universality.

In some implementations of the disclosure, while determining the first probability that each character contained in the target text is the starting character of the core entity and the second probability that each character contained in the target text is the ending character of the core entity, a prior probability that each entity contained in the target text is a core entity may be further considered to improve the accuracy of labelling the core entities.

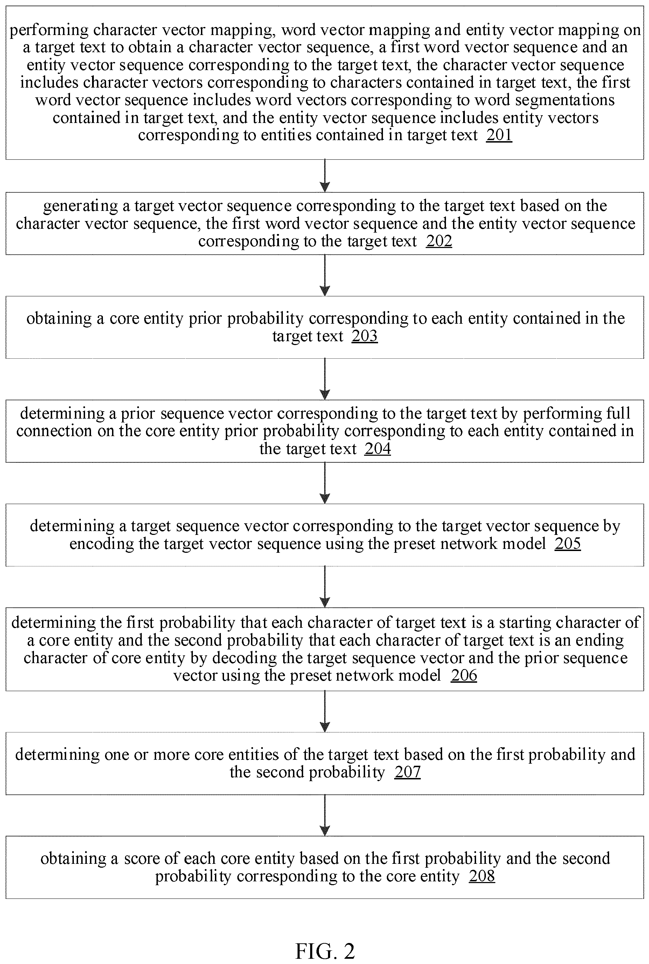

The method for labelling a core entity according to embodiments of the disclosure will be further described below with reference to FIG. 2.

FIG. 2 is a schematic flowchart illustrating a method for labelling a core entity according to embodiments of the disclosure.

As illustrated in FIG. 2, the method for labelling a core entity may include the following.

At block 201, character vector mapping, word vector mapping, and entity vector mapping are performed respectively on a target text, to obtain a character vector sequence, a first word vector sequence, and an entity vector sequence corresponding to the target text. The character vector sequence includes character vectors corresponding to characters contained in the target text. The first word vector sequence includes word vectors corresponding to word segmentations contained in the target text. The entity vector sequence includes entity vectors corresponding to entities contained in the target text.

At block 202, a target vector sequence corresponding to the target text is generated based on the character vector sequence, the first word vector sequence, and the entity vector sequence corresponding to the target text.

For detailed implementation process and principles of the blocks 201-202, reference may be made to the above detailed description, which will not be repeated here.

At block 203, a core entity priori probability corresponding to each entity contained in the target text is obtained.

The core entity prior probability corresponding to the entity may refer to a prior probability that the entity is a core entity, and the prior probability that the entity is a core entity may be predicted using historical usage data of labelling, by a preset network model, the entity as the core entity.

In some implementations, for each entity contained in the target text, while determining that the entity contained in the target text is a core entity, a starting character probability determined by the preset network model that a starting character corresponding to the entity is the starting character of the core entity is obtained from the historical usage data of the preset network model, and an ending character probability determined by the preset network model that an ending character corresponding to the entity is the ending character of the core entity is obtained from the historical usage data of the preset network model. An average value of the starting character probability and the ending character probability corresponding to that the entity is determined as a core entity may be determined as the core entity prior probability corresponding to the entity.

For example, the target text includes an entity A. From the historical data of the preset network model, the entity A may be determined as a core entity for three times. When the entity A is determined as the core entity for the first time, the probability that the starting character corresponding to the entity A is the starting character of the core entity is 0.8 and the probability that the ending character corresponding to the entity A is the ending character of the core entity is 0.9. When the entity A is determined as the core entity for the second time, the probability that the starting character corresponding to the entity A is the starting character of the core entity is 0.9 and the probability that the ending character corresponding to the entity A is the ending character of the core entity is 0.9. When the entity A is determined as the core entity for the third time, the probability that the starting character corresponding to the entity A is the starting character of the core entity is 0.9 and the probability that the ending character corresponding to the entity A is the ending character of the core entity is 1.0. Therefore, the core entity prior probability corresponding to the entity A may be determined as (0.8+0.9+0.9+0.9+0.9+1) / 6=0.9.

It should be noted, manners of determining the core entity prior probability corresponding to each entity contained in the target text may include, but be not limited to, the above-mentioned manner. In actual use, the method for determining the core entity prior probability may be selected based on actual needs and application scenarios, which is not limited in embodiments of the disclosure.

At block 204, full connection is performed on the core entity prior probability corresponding to each entity contained in the target text, to determine a prior sequence vector corresponding to the target text.

In embodiments of the disclosure, after determining the core entity prior probability corresponding to each entity contained in the target text, the full connection processing may be performed on the core entity prior probability corresponding to each entity to combine the core entity prior probability corresponding to each entity and generate the prior sequence vector corresponding to the target text. That is, each element in the prior sequence vector is a core entity prior probability corresponding to each entity contained in the target text.

At block 205, the target vector sequence is encoded using a preset network model to determine a target sequence vector corresponding to the target vector sequence.

The target sequence vector corresponding to the target vector sequence may be a vector generated by splicing the vectors contained in the target vector sequence, or a vector generated by determining a weighted average of the vectors contained in the target vector sequence.

In embodiments of the disclosure, an average merging layer in the preset network model may be used to encode the target vector sequence to determine the target sequence vector corresponding to the target vector sequence.

At block 206, the target sequence vector and a prior sequence vector are decoded using a preset network model to determine the first probability that each character contained in the target text is the starting character of a core entity and the second probability that each character contained in the target text is the ending character of a core entity.

In embodiments of the disclosure, the target sequence vector and the prior sequence vector may be decoded using the preset network model, such that the prior sequence vector may be considered while determining the first probability that each character contained in the target text is the starting character of the core entity and the second probability that each character contained in the target text is the ending character of the core entity based on the target sequence vector, thereby improving the accuracy of the output result of the preset network model.

At block 207, the one or more core entities of the target text may be determined based on the first probability that each character is the starting character of a core entity and the second probability that each character is the ending character of a core entity.

For detailed implementations and principle of the block 207, reference may be made to the above detailed description, which will not be repeated here.

At block 208, a score of each core entity may be determined based on the first probability that each character is the starting character of a core entity and the second probability that each character is the ending character of a core entity.

In embodiments of the disclosure, each determined core entity can be scored, such that the core entities can be screened based on the scores of the core entities if necessary, thereby expanding the application scenarios of the method for labelling a core entity according to embodiments of the disclosure and further improving the universality.

In some implementations, an average value of the first probability that each character is the starting character of a core entity and the second probability that each character is the ending character of a core entity may be determined as the score of the core entity.

For example, for a core entity A, the first probability corresponding to the core entity A is 0.9, while the second probability corresponding to the core entity A is 0.8. The score of the core entity A may be (0.9+0.8) / 2=0.85.

Further, since the double-pointer labelling method is used in the method for labelling a core entity according to embodiments of the disclosure, it is easy to cause coverage and intersection of the resultant core entities. Therefore, in order to reduce the redundancy probability of the resultant core entities, the score of each core entity may be determined to screen the resultant core entities and remove redundant core entities. That is, in some implementations of the disclosure, in response to determining that the target text includes multiple core entities, the method may include the following after the block 208.

It is determined whether the multiple core entities contained in the target text include intersected entities. In response to determining that a first entity intersects with a second entity and a third entity respectively, it may be determined whether the score of the first entity is greater than a sum of the score of the second entity and the score of the third entity. In response to determining that the score of the first entity is greater than the sum of the score of the second entity and the score of the third entity, the second entity and the third entity are removed from the core entities of the target text. In response to determining that the sum of the score of the second entity and the score of the third entity is greater than the score of the first entity, the first entity is removed from the core entities of the target text. The first entity, the second entity and the third entity are three of the multiple core entities.

The first entity intersecting with the second entity and the third entity means that the first entity includes the second entity and the third entity. For example, the first entity may be "Lu Zhiang and Qi Qi", the second entity may be "Lu Zhiang", and the third entity may be "Qi Qi".

In some implementations, in response to determining that the target text contains multiple core entities, it can be determined whether each core entity intersects another core entity, and a core entity having a low score is removed based on the scores of the core entities.

In detail, in a case where the score of the first entity is greater than the sum of the score of the second entity and the score of the third entity, it can be determined that a reliability of using the first entity as a core entity is greater than the reliability of using both the second entity and the third entity as core entities. As a result, the second entity and the third entity can be removed from the resultant core entities of the target text. In a case where the sum of the score of the second entity and the score of the third entity is greater than the score of the first entity, it can be determined that the reliability of using both the second entity and the third entity as core entities is greater than the reliability of using the first entity as a core entity. As a result, the first entity can be removed from the resultant core entities of the target text.

For example, the target text may be "夏至未至：陆之昂和七七开始吃了起来，七七太能吃! (a Chinese sentence meaning 'Rush to the Dead Summer: Lu Zhiang and Qi Qi start eating and Qi Qi eats too much!')". The resultant core entities of the target text may include "陆之昂 (a Chinese phrase or term formed by Chinese characters, corresponding to 'Lu Zhiang')," "七七 (a Chinese phrase or term formed by Chinese characters, corresponding to 'Qi Qi')," and "陆之昂和七七 (a Chinese phrase or term formed by Chinese characters, corresponding to 'Lu Zhiang and Qi qi')". the score of the entity "陆之昂" is 0.7,

the score of the entity "七七" is 0.8, and the score of the entity "陆之昂和七七" is 0.9. It may be determined that the sum of the score of the entity "陆之昂" and the score of the entity "七七" is greater than the score of the entity "陆之昂和七七", and thus entity "陆之昂和七七" can be removed from the core entities of the target text.

Based on embodiments of the disclosure, the target vector sequence corresponding to the target text is generated based on the character vector sequence, the first word vector sequence, and the entity vector sequence corresponding to the target text. The full connection process is performed on core entity prior probabilities corresponding to entities contained in the target text to determine the prior sequence vector. The target vector sequence is encoded using the preset network model to obtain the target sequence vector corresponding to the target vector sequence. The target sequence vector and the prior sequence vector are decoded to determine the first probability that each character is the starting character of a core entity and the second probability that each character is the ending character of a core entity. Core entities contained in the target text and scores of the core entities may be determined based on the first probability and the second probability. Therefore, by comprehensively considering the character vectors, the word vectors and the entity vectors of the target text, the core entities of the target text and the scores of the core entities are determined using the preset network model and the prior features of the core entities, thereby enriching the semantic information of the core text content, and improving the accuracy and universality of labelling the core entities.

In some implementations of the disclosure, in a case where the target text contains multiple parallel entities, it is also possible to perform entity vector mapping on one entity of the multiple parallel entities, and determine whether another parallel entity to the entity is a core entity based on an identification result of the entity, thereby reducing the computational complexity of labelling the core entities.

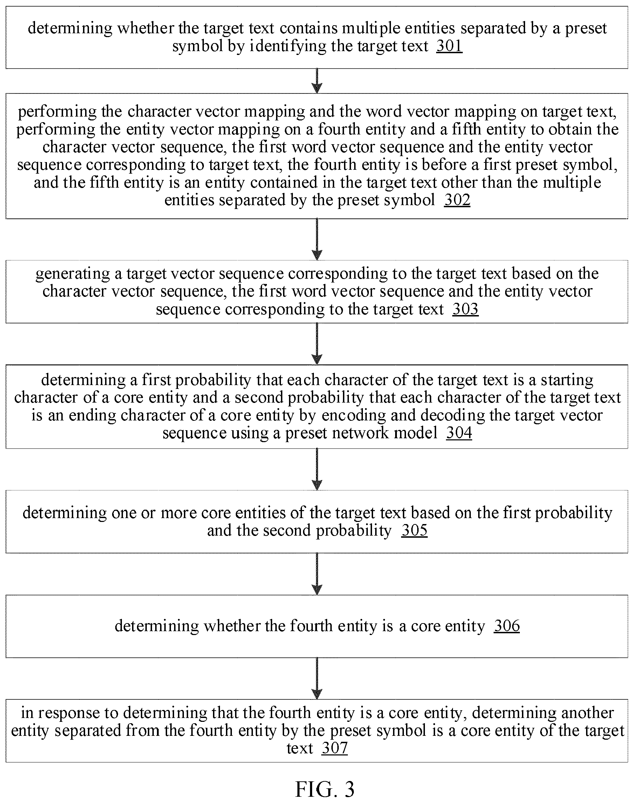

Below, the method for labelling a core entity according to embodiments of the disclosure will be described in conjunction with FIG. 3.

FIG. 3 is a schematic flowchart illustrating a method for labelling a core entity according to embodiments of the disclosure.

As illustrated in FIG. 3, the method for labelling a core entity may include the following.

At block 301, a target text is identified and it is determined whether the target text contains multiple entities separated by one or more preset symbols.

The preset symbol may be a symbol, such as a comma, that can indicate a parallel relationship. In actual use, the preset symbols can be set based on actual needs.

In embodiments of the disclosure, in order to reduce the algorithm complexity, in a case where the target text contains multiple parallel entities, one of the entities can be identified, and it may be determined whether the other parallel entities are core entities based on the identification result of the entity.

In some implementations, the target text can be identified to determine whether the target text contains one or more preset symbols. In response to determining that the target text contains a preset symbol, the entities before and after the preset symbol are determined as the parallel entities.

It should be noted, while determining whether the target text contains multiple entities separated by one or more preset symbols, a character vector corresponding to the preset symbol can be compared with the character vector corresponding to each character of the target text. It may be determined that the target text contains the preset symbol in response to that the character vectors corresponding to the characters of the target text contains a character vector matching the character vector corresponding to the preset symbol. The entities before and after the preset symbol in the target text can be determined as the multiple entities contained in the target text and separated by the preset symbol.

At block 302, character vector mapping and word vector mapping are performed respectively on the target text, and entity vector mapping is performed on a fourth entity before a first preset symbol and on a fifth entity respectively to obtain the character vector sequence, the first word vector sequence, and the entity vector sequence corresponding to the target text. The fifth entity is an entity contained in the target text other than the multiple entities separated by the preset symbol.

The fourth entity refers to an entity that is contained in the target text and appears firstly among the multiple entities separated by the preset symbol. The fifth entity refers to an entity contained in the target text other than the multiple entities separated by the preset symbol. For example, the preset symbol may be "comma", the target text may contain an entity A, an entity B, an entity C, an entity D, and an entity E, and the entity A, the entity B, and the entity C appear in the target text in turn and are separated by a comma. Thus, the fourth entity is entity A, and the fifth entity includes the entity D and the entity E.

In embodiments of the disclosure, in a case where the target text includes multiple parallel entities separated by the preset symbol, while performing the entity vector mapping on the target text, the fourth entity that appears first among the parallel entities and the fifth entity can be subjected to the entity vector mapping, to determine the entity vector sequence corresponding to the target text, thereby reducing the calculation amount of entity vector mapping of the target text and improving the efficiency of labelling the core entities.

For other detailed implementations and principles of the foregoing block 302, reference may be made to the above detailed description, which will not be repeated here.

At block 303, a target vector sequence corresponding to the target text is generated based on the character vector sequence, the first word vector sequence and the entity vector sequence corresponding to the target text.

At block 304, a first probability that each character contained in the target text is a starting character of a core entity and a second probability that each character contained in the target text is an ending character of a core entity are determined by encoding and decoding the target vector sequence using the preset network model.

At block 305, one or more core entities of the target text are determined based on the first probability that each character is the starting character of the core entity and the second probability that each character is the ending character of the core entity.

For details implementations and principles of the blocks 303-305, reference may be made to the above detailed description, which will not be repeated here.

At block 306, it is determined whether the fourth entity is a core entity.

At block 307, in a case that the fourth entity is a core entity, another entity that is separated from the fourth entity by the preset symbol is determined as a core entity of the target text.

In embodiments of the disclosure, after the core entities of the target text are determined, it can be further determined whether the core entities of the target text include the fourth entity. In response to determining that the fourth entity is included, another entity separated from the fourth entity by the preset symbol is determined as the core entity of the target text. In response to determining that the fourth entity is not a core entity, it is determined that other entities separated from the fourth entity by the preset symbol are not core entities of the target text.

Based on embodiments of the disclosure, in the case where the target text includes multiple entities separated by the preset symbol, the character vector mapping and the word vector mapping may be performed respectively on the target text, and the entity vector mapping may be performed respectively on the fourth entity before the first preset symbol and on the fifth entity contained in the target text other than the multiple entities separated by the preset symbol to obtain the character vector sequence, the first word vector sequence and the entity vector sequence corresponding to the target text. The target vector sequence corresponding to the target text may be generated based on the character vector sequence, the first word vector sequence and the entity vector sequence corresponding to the target text. The first probability that each character contained in the target text is the starting character of a core entity and the second probability that each character contained in the target text is the ending character of a core entity may be determined by encoding and decoding the target vector sequence using the preset network model. The core entities of the target text may be determined based on the first probability that each character is the starting character of a core entity and the second probability that each character is the ending character of a core entity. In response to determining that the fourth entity is a core entity, it may be determined that other entities separated from the fourth entity by the preset symbol are core entities of the target text. Therefore, by fusing the character vectors, word vectors, and entity vectors of the target text, and performing the entity vector mapping on one entity of multiple parallel entities, the core entities of the target text may be determined based on the identification result of the one of multiple parallel entities using the preset network model. Therefore, the semantic information of the core text content may be enriched, the accuracy and universality of labelling the core entities may be improved, and the efficiency of labelling the core entities may be improved.

In order to implement the above embodiments, the disclosure further provides an apparatus for labelling a core entity.

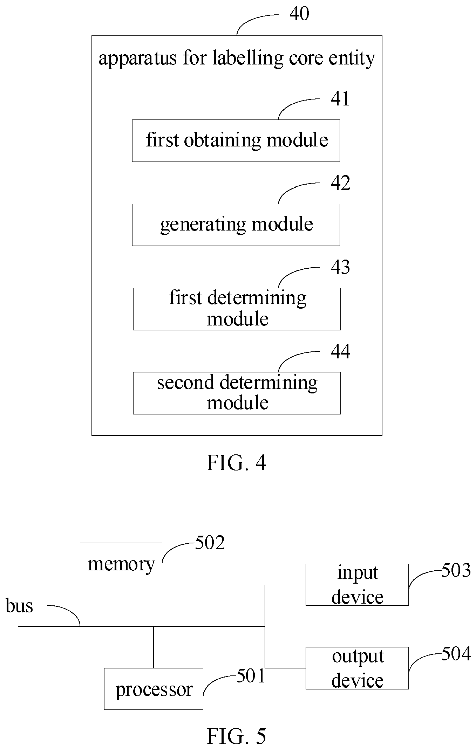

FIG. 4 is a schematic block diagram illustrating an apparatus for labelling a core entity according to embodiments of the disclosure.

As illustrated in FIG. 4, the apparatus 40 for labelling a core entity may include a first obtaining module 41, a generating module 42, a first determining module 43 and a second determining module 44.

The first obtaining module 41 may be configured to perform character vector mapping, word vector mapping and entity vector mapping on a target text to obtain a character vector sequence, a first word vector sequence and an entity vector sequence corresponding to the target text. The character vector sequence includes character vectors corresponding to characters contained in the target text. The first word vector sequence includes word vectors corresponding to word segmentations contained in the target text. The entity vector sequence includes entity vectors corresponding to entities contained in the target text.

The generating module 42 may be configured to generate a target vector sequence corresponding to the target text based on the character vector sequence, the first word vector sequence and the entity vector sequence corresponding to the target text.

The first determining module 43 may be configured to determine a first probability that each character of the target text is a starting character of a core entity and a second probability that each character of the target text is an ending character of a core entity by encoding and decoding the target vector sequence using a preset network model.

The second determining module 44 may be configured to determine one or more core entities of the target text based on the first probability and the second probability.

In actual use, the apparatus for labelling a core entity according to embodiments of the disclosure can be configured in an electronic device to execute the above method for labelling a core entity.

With the embodiments of the disclosure, by applying the character vector mapping, the word vector mapping and the entity vector mapping on the target text respectively, the character vector sequence, the first word vector sequence and the entity vector sequence corresponding to the target text may be obtained. The target sequence corresponding to the target text may be generated based on the character vector sequence, the first word vector sequence and the entity vector sequence corresponding to the target text. The first probability that each character of the target text is the starting character of the core entity and the second probability that each character of the target text is the ending character of the core entity may be determined by encoding and decoding the target vector sequence with the preset network model. The one or more core entities may be determined based on the first probability and the second probability. Therefore, by fusing the character vectors, the word vectors and the entity vectors, the first probability that each character of the target text is the starting character of the core entity and the second probability that each character of the target text is the ending character of the core entity may be determined using the preset network model. The core entities of the target text may be determined based on the first probability and the second probability. Therefore, the core entities may be accurately extracted from the text, semantic information of the core text content may be enriched and universality may be improved.

In some implementations of the disclosure, the above-mentioned apparatus 40 for labelling a core entity may further include a second obtaining module and a third determining module.

The second obtaining module may be configured to obtain a core entity prior probability corresponding to each entity contained in the target text.

The third determining module may be configured to determine a prior sequence vector corresponding to the target text by performing full connection on the core entity prior probability corresponding to each entity contained in the target text.

The above-mentioned first determining module 43 may be further configured to determine a target sequence vector corresponding to the target vector sequence by encoding the target vector sequence using the preset network model; and determine the first probability and the second probability by decoding the target sequence vector and the prior sequence vector using the preset network model.

Further, in some implementations of the disclosure, the above-mentioned generating module 42 may be configured to: generate a second word vector sequence by replicating a first word vector contained in the first word vector sequence for N times, in response to determining that a first word segment corresponding to the first word vector contains N characters; generate a third word vector sequence by performing matrix transformation on the second word vector sequence, in which the number of dimensions of the third word vector sequence is same with the number of dimensions of the character vector sequence corresponding to the target text; generate a preprocessed vector sequence by synthesizing the third word vector sequence and the character vector sequence corresponding to the target text; obtain a transformed vector sequence by performing matrix transformation on the entity vector sequence corresponding to the target text to align the transformed vector sequence to the preprocessed vector sequence, in which the number of dimensions of the transformed vector sequence is same with the number of dimensions of the preprocessed vector sequence; and generate the target vector sequence by synthesizing the transformed vector sequence and the preprocessed vector sequence.

Further, in some implementations of the disclosure, the above-mentioned generating module 42 may be configured to: generate the target vector sequence corresponding to the target text by slicing the character vector sequence, the first word vector sequence and the entity vector sequence corresponding to the target text.

Further, in some implementations of the disclosure, the above-mentioned apparatus 40 for labelling a core entity may further include a fourth determining module.

The fourth determining module may be configured to obtain a score of each core entity based on the first probability and the second probability corresponding to the core entity.

Further, in some implementations of the disclosure, in a case where the target text contains multiple core entities, the above-mentioned apparatus 40 for labelling a core entity may further include a first judging module, a second judging module, a first removing module and a second removing module.

The first judging module may be configured to determine whether the multiple core entities contained in the target text comprises intersected entities.

The second judging module may be configured to, in response to determining that a first entity intersects with both a second entity and a third entity, determine whether a score of the first entity is greater than a sum of a score of the second entity and a score of the third entity.

The first removing module may be configured to, in response to determining that the score of the first entity is greater than the sum of the score of the second entity and the score of the third entity, remove the second entity and the third entity from the one or more core entities of the target text.

The second removing module may be configured to, in response to determining that the sum of the score of the second entity and the score of the third entity is greater than the score of the first entity, remove the first entity from the one or more core entities of the target text.

Further, in some implementations of the disclosure, the above-mentioned apparatus 40 for labelling a core entity may further include a third judging module.

The third judging module may be configured to determine whether the target text contains multiple entities separated by a preset symbol by identifying the target text.

The above-mentioned first obtaining module 41 may be further configured to, in response to determining that target text contains the multiple entities separated by the preset symbol, perform the entity vector mapping on a fourth entity and a fifth entity, in which the fourth entity is before a first preset symbol, and the fifth entity is an entity contained in the target text other than the multiple entities separated by the preset symbol.

The above-mentioned apparatus 40 for labelling a core entity may further include a fourth judging module and a fifth determining module.

The fourth judging module may be configured to determine whether the fourth entity is a core entity.

The fifth determining module may be configured to, in response to determining that the fourth entity is a core entity, determine another entity separated from the fourth entity by the preset symbol is a core entity of the target text.

It should be noted, the above explanations of embodiments of the method for labelling a core entity illustrated in FIGS. 1, 2 and 3 may be also applicable to embodiments of the apparatus for labelling a core entity, which will not be repeated here.

With the embodiments of the disclosure, the target sequence corresponding to the target text may be generated based on the character vector sequence, the first word vector sequence and the entity vector sequence corresponding to the target text. The full connection may be performed on core entity prior probability corresponding to each entity contained in the target text to determine the prior sequence vector corresponding to the target text. By encoding the target vector sequence using the preset network model, the target sequence vector corresponding to the target vector sequence may bd determined. By decoding the target sequence vector and the prior sequence vector, the first probability that each character of the target text is the starting character of the core entity and the second probability that each character of the target text is the ending character of the core entity may be determined. The core entities of the target text and the score of each core entity may be determined based on the first probability and the second probability. Therefore, by fusing the character vectors, the word vectors and the entity vectors, the core entities of the target text and the score of each core entity may be determined by using the preset network model and the prior features of the core entities, thereby enriching the semantic information of the core text content, and further improving the accuracy and universality of labelling the core entities.

Embodiments of the disclosure provide a computer program, containing program instructions. When the program instructions are executed on a processor, the processor is caused to execute a method for labelling a core entity as described above. Embodiments of the disclosure further provide an electronic device and a readable storage medium.

As illustrated in FIG. 5, a block diagram is provided for illustrating an electronic device for implementing a method for labelling a core entity according to embodiments of the disclosure. The electronic device aims to represent various forms of digital computers, such as a laptop computer, a desktop computer, a workstation, a personal digital assistant, a server, a blade server, a mainframe computer and other suitable computers. The electronic device may also represent various forms of mobile devices, such as a personal digital processing, a cellular phone, a smart phone, a wearable device and other similar computing devices. The components, connections and relationships of the components, and functions of the components illustrated herein are merely examples, and are not intended to limit the implementation of the disclosure described and/or claimed herein.

As illustrated in FIG. 5, the electronic device includes: one or more processors 501, a memory 502, and interfaces for connecting various components, including a high-speed interface and a low-speed interface. Various components are connected to each other with different buses, and may be mounted on a common main board or mounted in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if necessary. Similarly, multiple electronic devices may be connected, and each electronic device provides a part of necessary operations (for example, as a server array, a group of blade servers, or a multiprocessor system). In FIG. 5, one processor 501 is taken as an example.

The memory 502 is a non-transitory computer-readable storage medium according to embodiments of the disclosure. The memory is configured to store instructions executable by at least one processor, to cause the at least one processor to execute a method for labelling a core entity according to embodiments of the disclosure. The non-transitory computer-readable storage medium according to embodiments of the disclosure is configured to store computer instructions. The computer instructions are configured to enable a computer to execute a method for labelling a core entity according to embodiments of the disclosure.

As the non-transitory computer-readable storage medium, the memory 502 may be configured to store non-transitory software programs, non-transitory computer executable programs and modules, such as program instructions/modules (such as, the first obtaining module 41, the generating module 42, the first determining module 43 and the second determining module 44) corresponding to a method for labelling a core entity according to embodiments of the disclosure. The processor 501 executes various functional applications and data processing of the server by operating non-transitory software programs, instructions and modules stored in the memory 502, that is, implements a method for labelling a core entity according to embodiments of the disclosure.

The memory 502 may include a storage program region and a storage data region. The storage program region may store an application required by an operating system and at least one function. The storage data region may store data created by implementing the method for labelling a core entity through the electronic device. In addition, the memory 502 may include a high-speed random-access memory and may also include a non-transitory memory, such as at least one disk memory device, a flash memory device, or other non-transitory solid-state memory device. In some embodiments, the memory 502 may optionally include memories remotely located to the processor 501 which may be connected to the electronic device configured to implement a method for labelling a core entity via a network. Examples of the above network include, but are not limited to, the Internet, an intranet, a local area network, a mobile communication network and combinations thereof.

The electronic device configured to implement a method for labelling a core entity may also include: an input device 503 and an output device 504. The processor 501, the memory 502, the input device 503, and the output device 504 may be connected through a bus or in other means. In FIG. 5, the bus is taken as an example.

The input device 503 may be configured to receive inputted digitals or character information, and generate key signal input related to user setting and function control of the electronic device configured to implement a method for labelling a core entity, such as a touch screen, a keypad, a mouse, a track pad, a touch pad, an indicator stick, one or more mouse buttons, a trackball, a joystick and other input device. The output device 504 may include a display device, an auxiliary lighting device (e.g., LED), a haptic feedback device (e.g., a vibration motor), and the like. The display device 504 may include, but be not limited to, a liquid crystal display (LCD), a light emitting diode (LED) display, and a plasma display. In some embodiments, the display device may be a touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general-purpose programmable processor, may receive data and instructions from a storage system, at least one input device and at least one output device, and may transmit the data and the instructions to the storage system, the at least one input device and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including machine readable medium that receives machine instructions as machine readable signals. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components, or the front-end component. Components of the system may be connected to each other through digital data communication in any form or medium (such as, a communication network). Examples of the communication network include a local area network (LAN), a wide area networks (WAN), and the Internet.

The computer system may include a client and a server. The client and the server are generally remote from each other and usually interact via the communication network. A relationship between the client and the server is generated by computer programs operated on a corresponding computer and having a client-server relationship with each other.

With the embodiments of the disclosure, by applying the character vector mapping, the word vector mapping and the entity vector mapping on the target text respectively, the character vector sequence, the first word vector sequence and the entity vector sequence corresponding to the target text may be obtained. The target sequence corresponding to the target text may be generated based on the character vector sequence, the first word vector sequence and the entity vector sequence corresponding to the target text. The first probability that each character of the target text is the starting character of the core entity and the second probability that each character of the target text is the ending character of the core entity may be determined by encoding and decoding the target vector sequence with the preset network model. The one or more core entities may be determined based on the first probability and the second probability. Therefore, by fusing the character vectors, the word vectors and the entity vectors, the first probability that each character of the target text is the starting character of the core entity and the second probability that each character of the target text is the ending character of the core entity may be determined using the preset network model. The core entities of the target text may be determined based on the first probability and the second probability. Therefore, the core entities may be accurately extracted from the text, semantic information of the core text content may be enriched and universality may be improved.

It should be understood, steps may be reordered, added or deleted by utilizing flows in the various forms illustrated above. For example, the steps described in the disclosure may be executed in parallel, sequentially or in different orders, so long as desired results of the technical solution disclosed by the disclosure may be achieved without limitation herein.

The above detailed implementations do not limit the protection scope of the disclosure. It should be understood by the skilled in the art that various modifications, combinations, subcombinations and substitutions may be made based on design requirements and other factors. Any modification, equivalent substitution and improvement made within the spirit and the principle of the disclosure shall be included in the protection scope of disclosure.

**Claims**

1. A method for labelling a core entity, comprising:

performing (101; 201) character vector mapping, word vector mapping and entity vector mapping on a target text to obtain a character vector sequence, a first word vector sequence and an entity vector sequence corresponding to the target text, wherein the character vector sequence comprises character vectors corresponding to characters contained in the target text, the first word vector sequence comprises word vectors corresponding to word segmentations contained in the target text, and the entity vector sequence comprises entity vectors corresponding to entities contained in the target text;

generating (102; 202; 303) a target vector sequence corresponding to the target text based on the character vector sequence, the first word vector sequence and the entity vector sequence corresponding to the target text;

determining (103; 304) a first probability that each character of the target text is a starting character of a core entity and a second probability that each character of the target text is an ending character of a core entity by encoding and decoding the target vector sequence using a preset network model; and

determining (104; 207; 305) one or more core entities of the target text based on the first probability and the second probability.

2. The method of claim 1, further comprising:

obtaining (203) a core entity prior probability corresponding to each entity contained in the target text, wherein the core entity prior probability corresponding to each entity is a prior probability that each entity is a core entity;

determining (204) a prior sequence vector corresponding to the target text by performing full connection on the core entity prior probability corresponding to each entity contained in the target text;

determining (205) a target sequence vector corresponding to the target vector sequence by encoding the target vector sequence using the preset network model; and

determining (206) the first probability and the second probability by decoding the target sequence vector and the prior sequence vector using the preset network model.

3. The method of claim 1 or 2, wherein generating (102; 202; 303) the target vector sequence corresponding to the target text comprises:

generating a second word vector sequence by replicating a first word vector contained in the first word vector sequence for N times, in response to determining that a first word segment corresponding to the first word vector contains N characters;

generating a third word vector sequence by performing matrix transformation on the second word vector sequence, wherein the number of dimensions of the third word vector sequence is same with the number of dimensions of the character vector sequence corresponding to the target text;

generating a preprocessed vector sequence by synthesizing the third word vector sequence and the character vector sequence corresponding to the target text;

obtaining a transformed vector sequence by performing matrix transformation on the entity vector sequence corresponding to the target text to align the transformed vector sequence to the preprocessed vector sequence, wherein the number of dimensions of the transformed vector sequence is same with the number of dimensions of the preprocessed vector sequence; and

generating the target vector sequence by synthesizing the transformed vector sequence and the preprocessed vector sequence.

4. The method of any one of claims 1 to 3, further comprising:
obtaining (208) a score of each core entity based on the first probability and the second probability corresponding to the core entity.

5. The method of claim 4, in a case where the target text contains multiple core entities, comprising:

determining whether the multiple core entities contained in the target text comprises intersected entities;

in response to determining that a first entity intersects with both a second entity and a third entity, determining whether a score of the first entity is greater than a sum of a score of the second entity and a score of the third entity, wherein the first entity, the second entity and the third entity are three of the multiple core entities;

in response to determining that the score of the first entity is greater than the sum of the score of the second entity and the score of the third entity, removing the second entity and the third entity from the one or more core entities of the target text; and

in response to determining that the sum of the score of the second entity and the score of the third entity is greater than the score of the first entity, removing the first entity from the one or more core entities of the target text.

6. The method of any one of claims 1 to 5, further comprising:

determining (301) whether the target text contains multiple entities separated by a preset symbol by identifying the target text;

in response to determining that target text contains the multiple entities separated by the preset symbol, performing (302) the entity vector mapping on a fourth entity and a fifth entity, wherein the fourth entity is before a first preset symbol, and the fifth entity is an entity contained in the target text other than the multiple entities separated by the preset symbol;

determining (306) whether the fourth entity is a core entity;

in response to determining that the fourth entity is a core entity, determining (307) another entity separated from the fourth entity by the preset symbol is a core entity of the target text.

7. An apparatus (40) for labelling a core entity, comprising:

a first obtaining module (41), configured to perform character vector mapping, word vector mapping and entity vector mapping on a target text to obtain a character vector sequence, a first word vector sequence and an entity vector sequence corresponding to the target text, wherein the character vector sequence comprises character vectors corresponding to characters contained in the target text, the first word vector sequence comprises word vectors corresponding to word segmentations contained in the target text, and the entity vector sequence comprises entity vectors corresponding to entities contained in the target text;

a generating module (42), configured to generate a target vector sequence corresponding to the target text based on the character vector sequence, the first word vector sequence and the entity vector sequence corresponding to the target text;

a first determining module (43), configured to determine a first probability that each character of the target text is a starting character of a core entity and a second probability that each character of the target text is an ending character of a core entity by encoding and decoding the target vector sequence using a preset network model; and

a second determining module (44), configured to determine one or more core entities of the target text based on the first probability and the second probability.

8. The apparatus (40) of claim 7, further comprising:

a second obtaining module, configured to obtain a core entity prior probability corresponding to each entity contained in the target text, wherein the core entity prior probability corresponding to each entity is a prior probability that each entity is a core entity; and

a third determining module, configured to determine a prior sequence vector corresponding to the target text by performing full connection on the core entity prior probability corresponding to each entity contained in the target text; and

the first determining module (43) is further configured to:

determine a target sequence vector corresponding to the target vector sequence by encoding the target vector sequence using the preset network model; and

determine the first probability and the second probability by decoding the target sequence vector and the prior sequence vector using the preset network model.

9. The apparatus (40) of claim 7 or 8, wherein the generating module (42) is further configured to:

generate a second word vector sequence by replicating a first word vector contained in the first word vector sequence for N times, in response to determining that a first word segment corresponding to the first word vector contains N characters;

generate a third word vector sequence by performing matrix transformation on the second word vector sequence, wherein the number of dimensions of the third word vector sequence is same with the number of dimensions of the character vector sequence corresponding to the target text;

generate a preprocessed vector sequence by synthesizing the third word vector sequence and the character vector sequence corresponding to the target text;

obtain a transformed vector sequence by performing matrix transformation on the entity vector sequence corresponding to the target text to align the transformed vector sequence to the preprocessed vector sequence, wherein the number of dimensions of the transformed vector sequence is same with the number of dimensions of the preprocessed vector sequence; and

generate the target vector sequence by synthesizing the transformed vector sequence and the preprocessed vector sequence.

10. The apparatus (40) of any one of claims 7 to 9, further comprising:

a fourth determining module, configured to obtain a score of each core entity based on the first probability and the second probability corresponding to the core entity.

11. The apparatus (40) of claim 10, in a case where the target text contains multiple core entities, comprising:

a first judging module, configured to determine whether the multiple core entities contained in the target text comprises intersected entities;
a second judging module, configured to, in response to determining that a first entity intersects with both a second entity and a third entity, determine whether a score of the first entity is greater than a sum of a score of the second entity and a score of the third entity, wherein the first entity, the second entity and the third entity are three of the multiple core entities;
a first removing module, configured to, in response to determining that the score of the first entity is greater than the sum of the score of the second entity and the score of the third entity, remove the second entity and the third entity from the one or more core entities of the target text; and
a second removing module, configured to, in response to determining that the sum of the score of the second entity and the score of the third entity is greater than the score of the first entity, remove the first entity from the one or more core entities of the target text.

12. The apparatus (40) of any one of claims 7 to 11, further comprising:

a third judging module, configured to determine whether the target text contains multiple entities separated by a preset symbol by identifying the target text;
wherein the first obtaining module (41) is further configured to, in response to determining that target text contains the multiple entities separated by the preset symbol, perform the entity vector mapping on a fourth entity and a fifth entity, wherein the fourth entity is before a first preset symbol, and the fifth entity is an entity contained in the target text other than the multiple entities separated by the preset symbol;
wherein the apparatus further comprises:

a fourth judging module, configured to determine whether the fourth entity is a core entity; and
a fifth determining module, configured to, in response to determining that the fourth entity is a core entity, determine another entity separated from the fourth entity by the preset symbol is a core entity of the target text.

13. An electronic device, comprising:

at least one processor; and
a memory, connected communicatively with the at least one processor;
wherein the memory has instructions executable by the at least one processor, when the instructions are executed by the at least one processor, the at least one processor is configured to execute a method of any one of claims 1 to 6.

14. A non-transitory computer readable storage medium, having computer instructions stored thereon, wherein the computer instructions are configured to cause a computer to execute a method of any one of claims 1 to 6.

15. A computer program containing program instructions, when executed on a processor, causing the processor to execute a method for labelling a core entity of any one of claims 1 to 6.

performing character vector mapping, word vector mapping and entity vector mapping on a target text to obtain a character vector sequence, a first word vector sequence and an entity vector sequence corresponding to the target text, the character vector sequence includes character vectors corresponding to characters contained in target text, the first word vector sequence includes word vectors corresponding to word segmentations contained in target text, and the entity vector sequence includes entity vectors corresponding to entities contained in target text
101

generating a target vector sequence corresponding to the target text based on the character vector sequence, the first word vector sequence and the entity vector sequence corresponding to the target text 102

determining a first probability that each character of the target text is a starting character of a core entity and a second probability that each character of the target text is an ending character of a core entity by encoding and decoding the target vector sequence using a preset network model 103

determining one or more core entities of the target text based on the first probability and the second probability 104

FIG. 1

performing character vector mapping, word vector mapping and entity vector mapping on a target text to obtain a character vector sequence, a first word vector sequence and an entity vector sequence corresponding to the target text, the character vector sequence includes character vectors corresponding to characters contained in target text, the first word vector sequence includes word vectors corresponding to word segmentations contained in target text, and the entity vector sequence includes entity vectors corresponding to entities contained in target text 201

generating a target vector sequence corresponding to the target text based on the character vector sequence, the first word vector sequence and the entity vector sequence corresponding to the target text 202

obtaining a core entity prior probability corresponding to each entity contained in the target text 203

determining a prior sequence vector corresponding to the target text by performing full connection on the core entity prior probability corresponding to each entity contained in the target text 204

determining a target sequence vector corresponding to the target vector sequence by encoding the target vector sequence using the preset network model 205

determining the first probability that each character of target text is a starting character of a core entity and the second probability that each character of target text is an ending character of core entity by decoding the target sequence vector and the prior sequence vector using the preset network model 206

determining one or more core entities of the target text based on the first probability and the second probability 207

obtaining a score of each core entity based on the first probability and the second probability corresponding to the core entity 208

FIG. 2

determining whether the target text contains multiple entities separated by a preset symbol by identifying the target text 301

performing the character vector mapping and the word vector mapping on target text, performing the entity vector mapping on a fourth entity and a fifth entity to obtain the character vector sequence, the first word vector sequence and the entity vector sequence corresponding to target text, the fourth entity is before a first preset symbol, and the fifth entity is an entity contained in the target text other than the multiple entities separated by the preset symbol 302

generating a target vector sequence corresponding to the target text based on the character vector sequence, the first word vector sequence and the entity vector sequence corresponding to the target text 303

determining a first probability that each character of the target text is a starting character of a core entity and a second probability that each character of the target text is an ending character of a core entity by encoding and decoding the target vector sequence using a preset network model 304

determining one or more core entities of the target text based on the first probability and the second probability 305

determining whether the fourth entity is a core entity 306

in response to determining that the fourth entity is a core entity, determining another entity separated from the fourth entity by the preset symbol is a core entity of the target text 307

FIG. 3

40

apparatus for labelling core entity

41

first obtaining module

42

generating module

43

first determining module

44

second determining module

FIG. 4

502

memory

503

input device

bus

501

processor

504

output device

FIG. 5

Europäisches
Patentamt

European
Patent Office

Office européen
des brevets

## EUROPEAN SEARCH REPORT

Application Number

EP 21 15 1484

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STRAVS MIHA ET AL: "Named Entity Recognition Using Gazetteer of Hierarchical Entities", ADVANCES IN INTELLIGENT DATA ANALYSIS XIX; [LECTURE NOTES IN COMPUTER SCIENCE; LECT.NOTES COMPUTER], vol. 65, no. 485959, 2019, pages 768-776, XP047596993, ISSN: 0302-9743 ISBN: 978-3-030-71592-2 * abstract * * sections 1 and 2 * ----- | 1-15 | INV. G06F40/295 |

TECHNICAL FIELDS
SEARCHED    (IPC)

G06F

The present search report has been drawn up for all claims

| Place of search | Date of completion of the search | Examiner |
|---|---|---|
| Munich | 9 June 2021 | Hauck, Rainer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)